# EUROPEAN PATENT APPLICATION

(11) **EP 1 895 431 A1**
(43) Date of publication of application: **05.03.2008**
(21) Application number: 07108880.1
(22) Date of filing: 24.05.2007
(51) Int. Cl.: G06F 13/42

(54) **A method to embed protocol for system management bus implementation**

(30) Priority: 31.08.2006 US 469207
(71) Applicant: Honeywell International Inc., Morristown NJ 07962 (US)
(72) Inventor: Cooley, Stephen, Seminole, FL 33775 (US); Villarosa, Louis F. Villarosa Jr., Tampa, FL 33607 (US)
(74) Representative: Haley, Stephen

(57) **Abstract**

A method of adapting the System Management Bus protocol to increase the number of peripheral components accessible to a control processor, the method including embedding a component address having a length of up to seven bits in a System Management Bus Block Write and completing a system transaction with the System Management Bus Block Write and a second data packet so that data is sent between the control processor and the peripheral component having the component address.

## Description

This application is related to United States Patent Applications Serial No. 11/469,176 (Attorney Docket No. H0011947.54939) having a title of "A SYSTEM MANAGEMENT BUS PORT SWITCH" (also referred to here as the "H0011947.54939Application") filed on the same date herewith. The H0011947.54939 application is hereby incorporated herein by reference.

The U.S. Government may have rights in the invention under a restricted government contract.

An embedded computer system that implements a System Management Bus protocol is limited in the number of registers or internal locations that are accessible within a single component. In some cases, the system is required to read from and/or write to more internal locations in a component than are addressable by the System Management Bus protocol. In such a case, additional switches and/or components are added to the system to provide access to additional internal location in the connected components.

A system with additional switches and/or components is complex and often requires a dedicated control processor to determine which switch and/or component to use at any given time. In this case, the system includes additional hardware which adds to the development and hardware costs of the system. If the computer system is used in an airborne system, the redundant bus adds weight to the payload.

It is desirable to provide read and write access to additional internal locations in a device without additional hardware.

A method of adapting the System Management Bus protocol to increase the number of peripheral components accessible to a control processor, the method including embedding a component address having a length of up to seven bits in a System Management Bus Block Write and completing a system transaction with the System Management Bus Block Write and a second data packet so that data is sent between the control processor and the peripheral component having the component address.
Figure 1 is a block diagram of one embodiment of a system to implement an adapted System Management Bus protocol in accordance with the present invention.
Figure 2 is a block diagram of one embodiment of a system to implement an adapted System Management Bus protocol in accordance with the present invention.
Figures 3-5 are block diagrams of embodiments of data packets transferred in an adapted System Management Bus protocol in accordance with the present invention.
Figure 6 is a block diagram of one embodiment of a System Management Bus interface operable with an adapted System Management Bus protocol in accordance with the present invention.
Figure 7 is a flow diagram of one embodiment of a System Management Bus state machine operable with the adapted System Management Bus protocol in accordance with the present invention.
Figure 8 is a flow diagram of one embodiment of a method of adapting the System Management Bus protocol to increase the number of peripheral components accessible to a control processor in accordance with the present invention.
Figure 9 is a flow diagram of one embodiment of a method of completing the system transaction with a SMBus Block Write and a second data packet in accordance with the present invention.
Figure 10 is a flow diagram of one embodiment of a method of reading data from a peripheral component and writing data to a peripheral component in accordance with the present invention.
Figure 11 is a flow diagram of one embodiment of a method of determining an address of a peripheral component in accordance with the present invention.
Figure 12 is a flow diagram of one embodiment of a method of transferring address information and a number of data packet accessed in a previous transaction in accordance with the present invention.

In accordance with common practice, the various described features are not drawn to scale but are drawn to emphasize features relevant to the present invention. Reference characters denote like elements throughout figures and text.

In the following detailed description, reference is made to the accompanying drawings that form a part hereof, and in which is shown by way of illustration specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

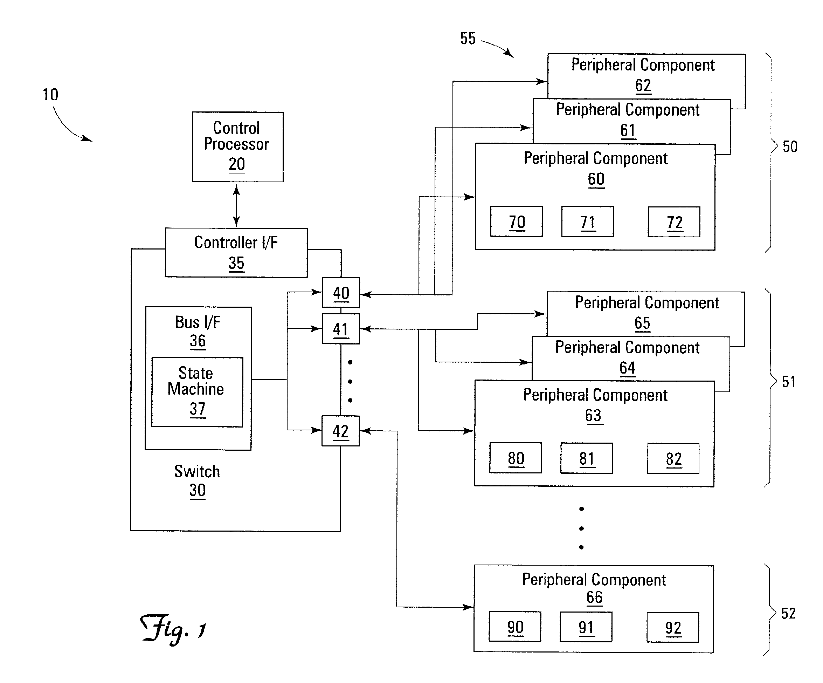

Figure 1 is a block diagram of one embodiment of a system 10 to implement an adapted System Management Bus protocol in accordance with the present invention. In one implementation of this embodiment, the alternative bus of system 10 is implemented when a primary bus fails or slows down due to heavy usage. In this case, a control processor sends data packets to the peripheral components via a switch in the alternative bus of system 10. In another implementation of this embodiment, the control processor sends data packets to the peripheral components via the switch in order to conduct an interrogation of system status and configuration without disrupting the activity on the primary bus. In one implementation of this embodiment, the control processor conducts an interrogation of system status and configuration via the alternative bus when the primary bus fails or slows down due to heavy usage. In another implementation of this embodiment, the control processor conducts all interrogations of system status and configuration via the alternative bus. In yet another implementation of this embodiment, the adaptation of the System Management Bus protocol is implemented when a switch reformats the System Management Bus protocol.

The system 10 includes a control processor 20, a switch 30 and a plurality of peripheral components represented generally by the numeral 55. The control processor 20 is communicatively coupled to the switch 30. The control processor 20 sends data packets to the switch 30 when implementing the alternative bus. The control processor 20 is referred to herein as a system controller 20.

The switch 30 includes a controller interface (I/F) 35, a bus interface (I/F) 36 and the plurality of ports generally represented by ports numbered 40, 41, and 42. The controller interface 35 receives data packets that are formatted according to a first protocol from the control processor 20. The bus interface 36 reformats the received data packets from the first protocol to a second protocol in order to adapt the first protocol in a manner that permits a controller or control processor to access an increased number of peripheral components. Each data packet formatted according to the second protocol is transferred to one or more of the plurality of peripheral components 55 via one of the communicatively coupled ports 40, 41 or 42. The bus interface 36 includes a bus state machine 37 that controls the functionality of the bus interface 36 during the reformatting of the data packets. The term "second protocol" is referred to herein as an "adapted System Management Bus protocol."

The plurality of peripheral components 55 comprises subsets 50, 51, and 52 of the plurality of peripheral components 55. The subset 50 of the plurality of peripheral components 55 is communicatively coupled to port 40 of the switch 30. The subset 50 includes peripheral components 60-62. A data packet transferred via port 40 is sent to the peripheral components 60-62.

The subset 51 of the plurality of peripheral components 55 is communicatively coupled to port 41 of the switch 30. The subset 51 includes peripheral components 63-65. A data packet transferred via port 41 is sent to the peripheral components 63-65.

Likewise, the subset 52 of the plurality of peripheral components 55 is communicatively coupled to port 42 of the switch 30. The subset 52 includes peripheral component 66. A data packet transferred via port 42 is sent to the peripheral component 66. In one implementation of this embodiment, the subset 52 includes more than one peripheral component.

In one implementation of this embodiment, the switch 30 includes twelve ports. In another implementation of this embodiment, the switch 30 includes twelve ports and each port is communicatively coupled to five peripheral components.

The peripheral components 60-66 each include one or more internal locations. In the illustrated embodiment, the peripheral component 60 includes internal locations 70, 71 and 72, the peripheral component 63 includes internal locations 80, 81 and 82, and the peripheral component 66 includes internal locations 90, 91 and 92. The internal locations in the peripheral components 61, 62, 64, and 65 are not shown in Figure 1. The control processor 20 accesses configuration and control registers at the internal locations. For example, control processor 20 accesses configuration and control registers at the internal locations 70-72, 80-82, 90-92, in the peripheral components 60, 63, and 66, respectively.

A primary bus (not shown) in the system 10 uses an embedded system primary bus architecture to transfer commands and data, between the control processor 20 and the peripheral components 60-66. When the primary bus is locked-up or producing errors during a transfer of data packets, the control processor 20 uses the switch 30, which functions as an alternate bus for the control processor 20. In order to function as an alternative bus to the primary bus, the bus state machine 37 in the switch 30 reformats data packets received from the control processor 20. Specifically, the bus interface 36 modifies the received data packets that are formatted according to the first protocol so that the data packets sent from the switch 30 are formatted according to a second protocol. In this manner the bus interface 36 and the bus state machine 37 in the switch 30 provide an alternative bus to the embedded system primary bus architecture to transfer commands between the control processor 20 and the peripheral components 60-66. The controller interface 35 receives the address of the peripheral component 60, 61, 62, 63, 64, 65, or 66 and data to be sent to the addressed peripheral component 60, 61, 62, 63 64, 65, or 66. The addressed peripheral component 60, 61, 62, 63 64, 65, or 66 is referred to here as "targeted peripheral component 60, 61, 62, 63 64, 65, or 66." The peripheral components 60-66 are slave devices for the switch.

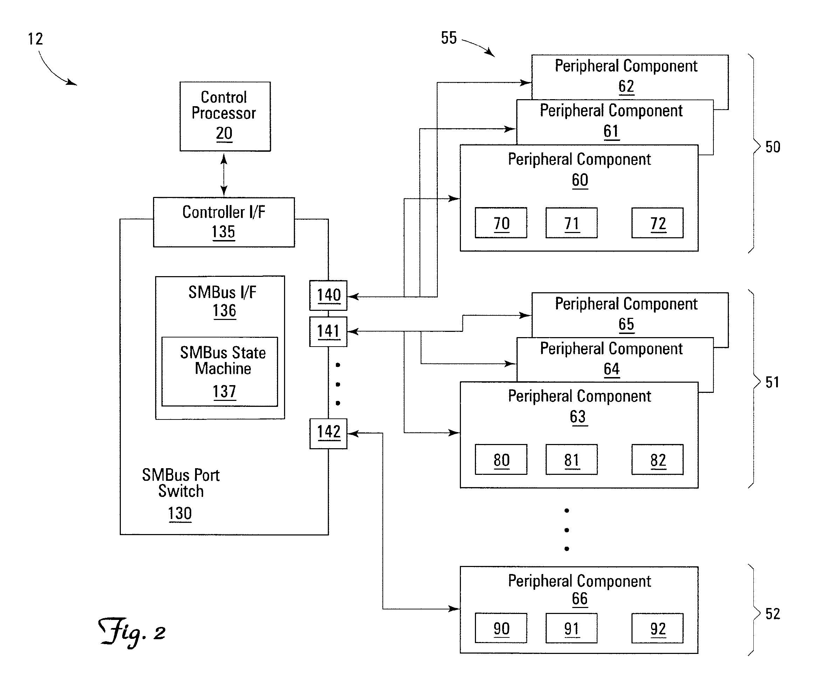

In one implementation of this embodiment, the first protocol data packet received from the control processor 20 is a RS232 data packet. In another implementation of this embodiment, the first protocol data packet received from the control processor 20 is formatted according to a Spacewire protocol. In yet another implementation of this embodiment, the first protocol data packet received from the control processor 20 is formatted according to a Rapid IO protocol. In yet another implementation of this embodiment, the first protocol data packet received from the control processor 20 is formatted according to a Spacewire protocol and the second protocol data packet sent from the switch 30 is formatted according to the System Management Bus protocol. A system to implement the latter embodiment is shown in Figure 2.

Figure 2 is a block diagram of one embodiment of a system 12 to implement an adapted System Management Bus protocol in accordance with the present invention. The alternative bus of system 12 is implemented when a failure of a primary bus is detected or when interrogation of system status and configuration is implemented without disrupting the activity on the primary bus. The unmodified System Management Bus protocol is limited in the number of registers that can be accessed within components communicatively coupled to the control processor 20. Two of the eleven protocols of the System Management Bus protocol are adapted to pass system address location and data stored at those internal locations between the system controller 20 and each peripheral component in the system 12 so that more registers are addressable by the system controller 20 than are addressable without the adapted System Management Bus protocol. The adapted SMBus protocols are referred to here as the "adapted protocol." The adapted SMBus protocols are the SMBus Block Write with packet error correction (PEC) and the SMBus Block Read with packet error correction (PEC). The adapted protocol uses a 24-bit address scheme and 32-bit data word structure. The adapted SMBus protocol has an additional upper address byte added for use in peripheral component selection. This byte becomes the peripheral component address, which is also referred to here as the "slave address." The peripheral component address byte is decoded to determine which peripheral component is being selected. The adapted SMBus protocol supports any number of components, up to 2⁷ or 128.

The adapted protocol uses a data structure having a 24-bit target address which defines the location of one 4-byte (32-bit) data word. The adapted SMBus protocol contains another additional byte that is added to the SMBus protocol to specify how many data words are to be transferred. This byte is referred to as the "block length". The block length has valid values of 4, 8, 12, 16, 20, 24, 28, and 32. The block length indicates how many data bytes are being transferred and correlates to the number of system data words that are being accessed (from 1 to 8).

In this manner, the system controller 20 is able to "peek and poke" internal configuration and status registers within the various components in the system 12. In one implementation of this embodiment, the system controller 20 is an application code on a control processor. In another implementation of this embodiment, the system controller 20 is an application code on a ground control in communication with a space based processing box. In one implementation of this latter case, the space based processing box uses a customized-high-speed-communication interconnect between circuit card assemblies.

System 12 is an embodiment of system 10 in which the switch 30 is replaced by a System Management Bus (SMBus) port switch 130, also referred to here as "SMBus switch 130" and "switch 130." The SMBus port switch 130 includes a SMBus controller interface (I/F) 135, a SMBus interface (I/F) 136 and a plurality of ports 140-144. Specifically, within the SMBus port switch 130, the bus interface 36 is replaced by a System Management Bus interface 136 and the bus state machine 37 is replaced by a System Management Bus state machine 137 that controls the functionality of the System Management Bus interface 136. Thus, system 12 includes the control processor 20, the SMBus port switch 130 and the plurality of peripheral components 55 communicatively coupled to one of the ports 140, 141, or 142 of the SMBus port switch 130. The control processor 20 is communicatively coupled to the SMBus port switch 130. The control processor 20 sends data packets to the SMBus port switch 130.

The plurality of peripheral components 55 comprises subsets 50, 51, and 52 as described above with reference to Figure 1. The subset 50 is communicatively coupled to port 140 of the switch 130. A data packet transferred via port 140 is sent to the peripheral components 60-62. The subset 51 is communicatively coupled to port 141 of the switch 130. A data packet transferred via port 141 is sent to the peripheral components 63-65. Likewise, the subset 52 is communicatively coupled to port 142 of the switch 130. A data packet transferred via port 142 is sent to the peripheral component 66.

The controller interface 135 receives data packets that are formatted according to a first protocol from the control processor 20. In one implementation of this embodiment, the first protocol is a Spacewire protocol. In another implementation of this embodiment, the first protocol is Rapid IO. In another implementation of this embodiment, the first protocol is RS232 data packets. The bus interface 136 reformats the received data packets from the first protocol to a System Management Bus (SMBus) protocol. A data packet formatted according to the SMBus protocol is transferred to a subset 50, 51, or 52 of the plurality of peripheral components 55 via the respective ports 140, 141 or 142. The SMBus interface 136 includes a SMBus state machine 137 that controls the functionality of the SMBus interface 136 during the reformatting of the data packets.

A primary bus in the system 12 uses an embedded system primary bus architecture to transfer commands and data between the control processor 20 and the plurality of peripheral components 55. When the primary bus is locked-up or producing errors during a transfer of data packets, the control processor 20 uses the switch 130, which functions as an alternate bus for the control processor 20. In order to function as an alternative bus to the primary bus, the bus state machine 137 in the switch 130 reformats data packets. Specifically, the bus interface 136 modifies the received data packets that are formatted according to the first protocol so that the data packets sent from the switch 30 are formatted according to the SMBus protocol. In this manner the bus interface 136 and the bus state machine 137 in the SMBus port switch 130 provide an alternative bus to the embedded system primary bus architecture to transfer commands between the control processor 20 and the peripheral components 60-66.

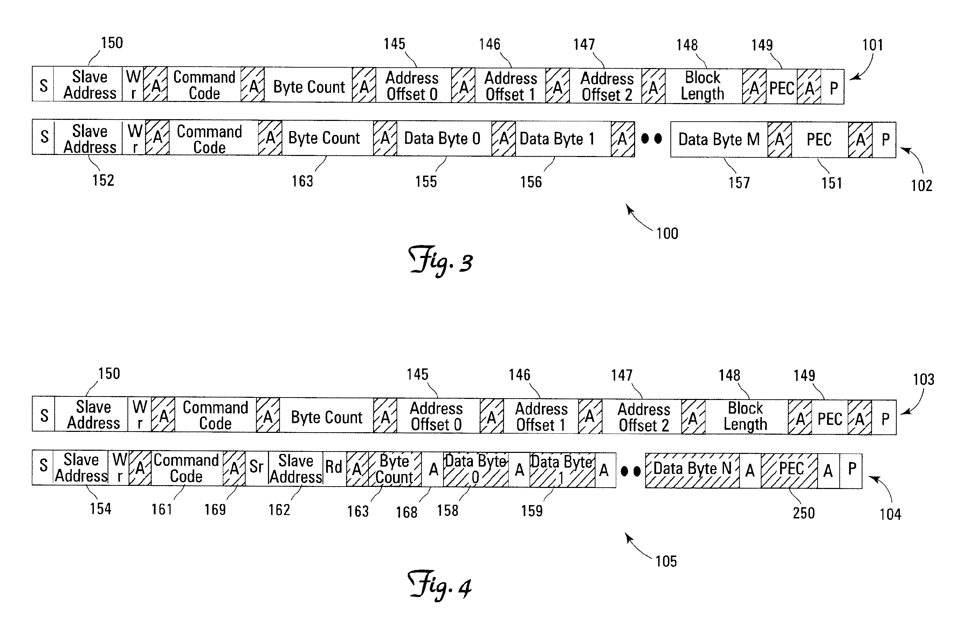

Figures 3-5 are block diagrams of embodiments of data packets transferred in an adapted System Management Bus protocol in accordance with the present invention. The structure of the data packets reformatted by the switch 30 or SMBus port switch 130 according the adapted System Management Bus protocol is shown in Figures 3-5. For the exemplary data packets shown in Figures 3-5, the boxes representative of data fields, for example data byte field 158 in Figure 4, are hatched to indicate the data is sent from the targeted peripheral component to the switch. Likewise, the un-hatched boxes, for example slave address field 150 of Figure 3, indicate the data is sent from the switch via a port to the peripheral components communicatively coupled to the port.

The SMBus protocols are adapted such that system writes are structured using two SMBus Block Writes with PEC. One SMBus Block Write contains the target address and block length. This transaction is called the SMBus Address Block Write using a SMBus Block Write with PEC. The next SMBus Block Write is used to transfer the data intended for the target address. This second transaction is called the SMBus Data Block Write using a SMBus Block Write with PEC.

Figure 3 is a SMBus Address Block Write followed by a SMBus Data Block Write used to write system data into a component's internal location according to an adapted System Management Bus protocol in accordance with the present invention. The SMBus port switch 130 transfers information for system writes using data packets 100 structured as a first SMBus Block Write with PEC 101 and a second SMBus Block Write with PEC 102. A SMBus Block Write with PEC is also referred to here as a "SMBus block write data packet 101" and a "SMBus Block Write 101." Specifically, the reformatted write command data packet 100 includes a first SMBus Block Write 101 followed by a second SMBus Block Write 102.

The SMBus Block Write 101, also referred to here as "address block write 101," transfers an address of the targeted peripheral component in the slave address field 150. The SMBus Block Write 101 also transfers the address of the internal location, for example internal location 70 of peripheral component 60, in the address offset field(s) 145, 146, and/or 147. The second SMBus Block Write 102, also referred to here as "data block write 102," transfers data to the targeted peripheral component in the data byte fields 155, 156 and 157. More or fewer data byte fields can be used as required. The address of the targeted peripheral component is in the slave address field 152 of the SMBus Block Write 102 and is the same as the slave address field 150 in the SMBus Block Write 101.

In one implementation of this embodiment, a first portion of the address block, such as the upper four binary bits in the slave address fields 150 and 152, are decoded by the SMBus port switch 130 to determine which port is being addressed. In this case, the number of peripheral ports connected to the switch is limited to sixteen. A second portion of the address block in the data packet, such as the lower three binary bits in the slave address fields 150 and 152, are decoded by the peripheral components to determine which peripheral component on the port is being addressed. In this case, the number of peripheral components connected to the switch is limited to eight.

Each peripheral component that receives the data packet 100 decodes the lower three bits of the slave address field 150 to determine if it is the targeted peripheral component for the data packet 100. If a peripheral component determines it is the targeted peripheral component, it decodes the address offset fields 145, 146, and 147 of the SMBus Block Write 101 to determine the address of the targeted internal location. After the internal location is known, the data sent from the switch 130 in the data byte fields 155, 156 and 157 of the data block write 102 of the data packet 100 is stored at the internal location.

For example, a data packet 100 is sent via port 140 (Figure 2) to the subset 50 of the plurality of peripheral components 55. The peripheral components 60, 61 and 62 each decode the lower three bits of the slave address 150 and 152 to determine if the peripheral component 60, 61 or 62 is the targeted peripheral component for the data packet 100. In this exemplary case, the peripheral component 60 is the targeted peripheral component for data packet 100, and the peripheral component 60 decodes the address offset field(s) 145, 146, and 147 in the SMBus Block Write 101 of data packet 100 to determine the internal location for the data packet 100. To continue this exemplary case, the peripheral component 60 determines the data packet 100 is addressed to the internal location 70 and the data within the data byte fields 155, 156 and 157 of the data block write 102 of the data packet 100 is stored in the targeted internal location 70. In one implementation of this embodiment, this process is implemented with switch 30 described above with reference to Figure 1.

The block length is added to the target address bytes embedded in the first SMBus Block Write 101 in the block length field 148. The peripheral component decodes the data in the block length field 148 to determine how many data bytes are being accessed. The byte count for the SMBus Block Write 101 is always four. The peripheral component checks the byte count received in the data block write 102 with the block length received in the address block write 101 to validate the two transfers. The peripheral component receives data in a PEC data field 149 as a checksum to protect the integrity of the data sent in the SMBus Block Write 101. The peripheral component receives data in a PEC data field 151 as a checksum to protect the integrity of the data sent in the SMBus Block write 102.

Figure 4 is a SMBus Block Write with PEC followed by a SMBus Block Read with PEC, which together are used to read data from a component's internal location according to an adapted System Management Bus protocol in accordance with the present invention. The target address is sent using the SMBus Block Write, which is also referred to as an address block write. The address transfer is implemented in the manner described above with reference to the system writes. The data being requested during a system read is transferred back to the control processor using a SMBus Block Read. This transfer is referred to as a data block read.

The targeted peripheral component transfers information for system reads to the SMBus port switch 130 in response to receiving a data packet 105. The data packet 105 is structured as a SMBus Block Write 103 followed by a SMBus Block Read 104. The SMBus Block Write 103, also referred to here as "address block write 103," transfers an address of the targeted peripheral component in the slave address field 150. The SMBus Block Write 103 also transfers the address of the internal location, for example internal location 70 of peripheral component 60, in the address offset field(s) 145, 146, and/or 147. The SMBus Block Read 104, also referred to here as "data block read 104," transfers data from the targeted peripheral component to the SMBus port switch 130 in the data byte fields 158 and 159. More or fewer data byte fields can be used as required.

The peripheral component uses the block length sent in the block length field 148 of SMBus Block Write 103 to determine how many bytes are requested starting at the internal location address enclosed in the address offset field(s) 145, 146, and/or 147 of the SMBus Block Write.

After the targeted peripheral component sends an acknowledgement in data field 169 to acknowledge receipt of the command code 161 in the SMBus Block Read 104, the SMBus port switch 130 resends the address of a targeted peripheral component in the second slave address field 162. The second slave address field 162 verifies to the targeted peripheral component that SMBus Block Read 104 is a read data packet.

The peripheral component embeds the block length, which was sent in the block length field 148 of SMBus Block Write 103, in the byte count field 163 in the SMBus Block Read 104. The targeted peripheral component then transfers data from the internal location, which was addressed in address offset field(s) 145, 146, and/or 147. The data from the internal location is sent in the data byte fields 158 and 159 from the targeted peripheral component to the SMBus port switch 130. The SMBus Switch 130 compares the byte count in the byte count field 163 received in the SMBus Block Read 104 with the block length in the block length field 148 that is sent in the SMBus Block Write 103 to validate the data transfer. In this manner, information from the internal location is sent to the switch in response to a transfer of the read command data packet 105.

In an exemplary case, the targeted peripheral component 63 receives the read command data packet 105 from the switch 130 via port 141; the peripheral component 63 determines that the internal location 82 is targeted in the address offset field(s) 145, 146 and/or 147 of the SMBus Block Write 103; the targeted peripheral component 63 responds to the receipt of the second slave address field 162 by sending data from the targeted internal location 82 in the data byte fields 158 and 159 as part of the SMBus Block Read 104 in the command data packet 105 to the switch 130 via port 142. The peripheral component receives data in a PEC data field 149 as a checksum to protect the integrity of the data sent in the SMBus Block Write 103. The peripheral component sends data in a PEC data field 250 as a checksum to protect the integrity of the data sent in the SMBus Block Read 104.

In this manner, the SMBus Block Read 104 completes the transaction with the switch 130. In one implementation of this embodiment, this process is implemented with switch 30 described above with reference to Figure 1.

The SMBus protocols are adapted so that system interrogations are structured using a SMBus Block Read with PEC with a unique command code. This interrogation transaction is implemented in a SMBus Address Block Read. In this case, the byte count for the SMBus Address Block Read is always four.

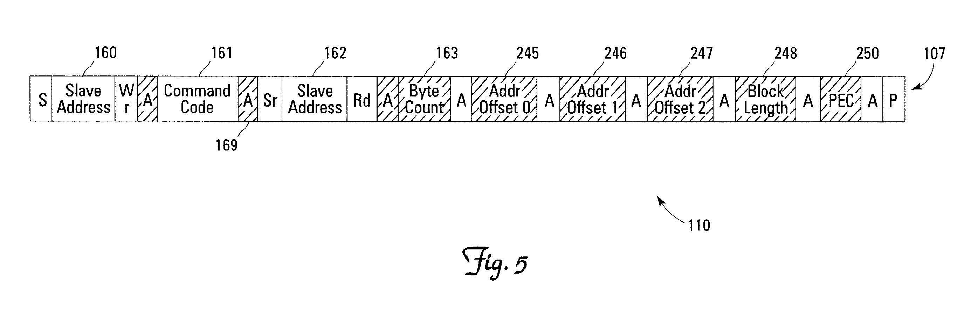

Figure 5 is a block diagram of a reformatted read command data packet 110 to transfer a command code from the SMBus port switch 130 in a system interrogation that is an adaptation of the System Management Bus protocol in accordance with the present invention. The SMBus port switch 130 interrogates the targeted peripheral component using a reformatted read command data packet 110 structured as a SMBus Address Block Read 107. The SMBus Address Block Read 107 includes an address of a targeted peripheral component in the slave address field 160 and in the slave address field 162 and also includes a selected command code in the command code field 161. After the targeted peripheral component sends the acknowledgement in data field 169 to acknowledge receipt of the command code 161, the SMBus port switch 130 resends the address of a targeted peripheral component in the slave address field 162 to indicate to the targeted peripheral component that SMBus Address Block Read 107 is a read data packet. The data indicative of the address of the internal location used in the peripheral component during the previous SMBus transaction is then sent from the targeted peripheral component to the SMBus port switch 130 in address offset field(s) 245, 246, and/or 247 of the SMBus Address Block Read 107. The targeted peripheral component then transfers data indicative of the number of data bytes accessed in the peripheral component in the previous SMBus transaction. The data indicative of the number of data bytes accessed in the peripheral component in the previous SMBus transaction is sent from the targeted peripheral component to the SMBus switch 130 in the block length field 248 of the SMBus Address Block Read 107. In this manner, the information indicative of how many bytes were accessed and for which internal location of the peripheral component during a previous transaction is transferred via the SMBus switch 130 to the control processor 20 (Figure 2) and the SMBus Address Block Read 107 completes the transaction with the SMBus switch 130.

In this adaptation of the System Management Bus protocol, the type of data sent during a SMBus transaction depends upon the command code in the command code field 161. The different encodings for the command byte for each exemplary command code are shown in Table 1 with the associated descriptions of the commands.

**Table 1. SMBus Command Code Byte**

| **Command** | **Assignment** | **Description** | **Rd/Wr** |
|---|---|---|---|
| Address Block Write | 1010 0101 | 24-Bit Address as Payload with Read/Write block length | Wr |
| Data Block Write | 0011 1100 | Payload of Data Bytes to be written to the address contained in a preceding Address Block Write | Wr |
| Data Block Read | 0110 0110 | Data read from the address specified in a preceding Address Block Write. Data to be sent as payload during a Block Read | Rd |
| Address Block Read | 1001 1001 | Read Back Payload Address and block length used in last SMBus access | Rd |

In an exemplary case, the peripheral component 66 receives a SMBus Address Block Read 107 from the switch 130. The SMBus Address Block Read 107 includes a selected command code "10011001" (Row 4 of Table 1) in the command code field 161 and the address of the peripheral component 66 in the slave address fields 160 and 162. In this exemplary case, the peripheral component 66 responds to the second slave address field 162 in the SMBus Address Block Read 107 by sending data in the byte count field 163 that indicates the number of data bytes being sent from the peripheral component 66 to the switch 130. The peripheral component 66 then sends data in the address offset field(s) 245, 246, and/or 247 of the SMBus Address Block Read 107 that indicate the internal location 91 of the peripheral component 66 that was used in the previous SMBus transaction. The peripheral component 66 then sends data in the block length field 248 to indicate the number of data bytes accessed in the previous SMBus transaction for the peripheral component 66. The peripheral component 66 then sends data in a PEC data field 250 as a checksum that is used to protect the integrity of the data sent in the SMBus Address Block Read 107. In one implementation of this embodiment, this process is implemented with switch 30 described above with reference to Figure 1.

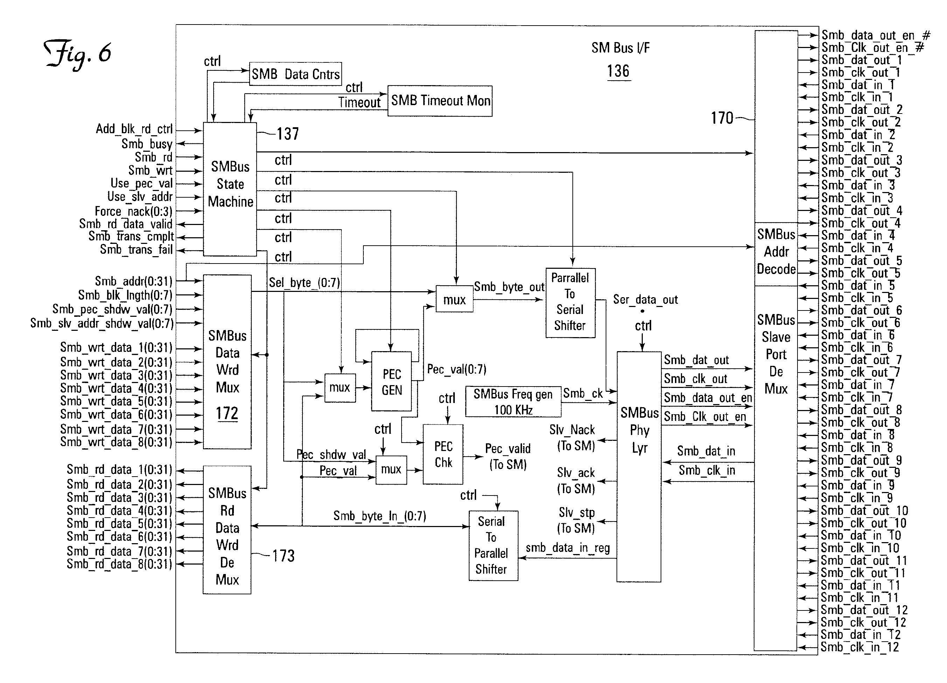

Figure 6 is a block diagram of one embodiment of a System Management Bus interface 136 operable with an adapted System Management Bus protocol in accordance with the present invention. In this exemplary case, the System Management Bus interface (SMBus I/F) 136 is for a SMBus port switch 130 having twelve ports, such as ports 140-142 (Figure 2). The System Management Bus interface 136 includes the SMBus state machine 137 to control the functionality of the SMBus interface 136 during the reformatting of the data packets to form data packets 100, 105, and 110. The SMBus state machine 137 is communicatively coupled to a SMBus slave port demultiplexer 170, a SMBus data word multiplexer 172 and a SMBus Read data word de-multiplexer 173 to control the SMBus interface 136. The SMBus slave port demultiplexer 170 is communicatively coupled to the ports, such as ports 140-142 (Figure 2).

An exemplary list of signal names and associated descriptions that are implemented in the SMBus interface 136 is shown in Table 2. The SIGNAL NAME column of Table 2 includes the signals indicated in the embodiment of the SMBus interface 136 for twelve ports shown in Figure 6. The DESCRIPTION column includes a description of the function of the each signal and the valid numbers of bytes, as necessary, for each signal.

| **SIGNAL NAME** | **DESCRIPTION** |
|---|---|
| SMB_RD_DATA_#(0:31) | Eight 32-bit Read Data Words received from a SMBus Slave Device and stored in internal Registers |
| SMB_WRT_DATA_#(0:31) | Eight 32-bit Write Data Words intended for a SMBus Port |
| SMB_ADDR(0:31) | 32 bit Address intended for SMBus Port |
| SMB_BLK_LNGTH(0:7) | 8 bit Block length indicates number of bytes to transfer. Valid numbers are 4, 8, 12, 16, 20, 24, 28, and 32. |
| SMB_PEC_SHDW_VAL(0:7) | invalid 8-bit Packet Error Code (PEC) value used for testing purposes |
| SMB_SLV_ADDR_SHDW_VA L(0:7) | invalid 8-bit Slave Address used for testing purposes |
| USE_PEC _VAL | Test Signal indicates SMBus to use invalid PEC value |
| USE_SLV_ADDR | Test Signal indicates SMBus to use invalid Slave Address |
| FORCE_NACK(0:3) | Test Signals used to force SMBus NACK events during reads. |
| SMB_RD | Read control |
| SMB_WRT | Write Control |
| SMB_BUSY | Signal indicates SMBus port is busy |
| SMB_RD DATA VALID | Signal indicates SMBus Data is Valid |
| SMB_TRANS_CMPLT | Signal indicates SMBus transaction is complete |
| SMB_TRANS_FAIL | Signal indicates SMBus transaction failed |
| SMB_DAT_OUT_# (#=1-12) | SMBus Data Out Port # signal |
| SMB_CLK_OUT_# (#=1-12) | SMBus Clock Out Port # signal |
| SMB_DAT_IN_# (#=1-12) | SMBus Data Out Port # signal |
| SMB_CLK_IN_# (#=1-12) | SMBus Clock Out Port # signal |
| SMB_OE_N | SMBus Port Bi-Dir control |

### Table 2: SMBus Interface Signal List

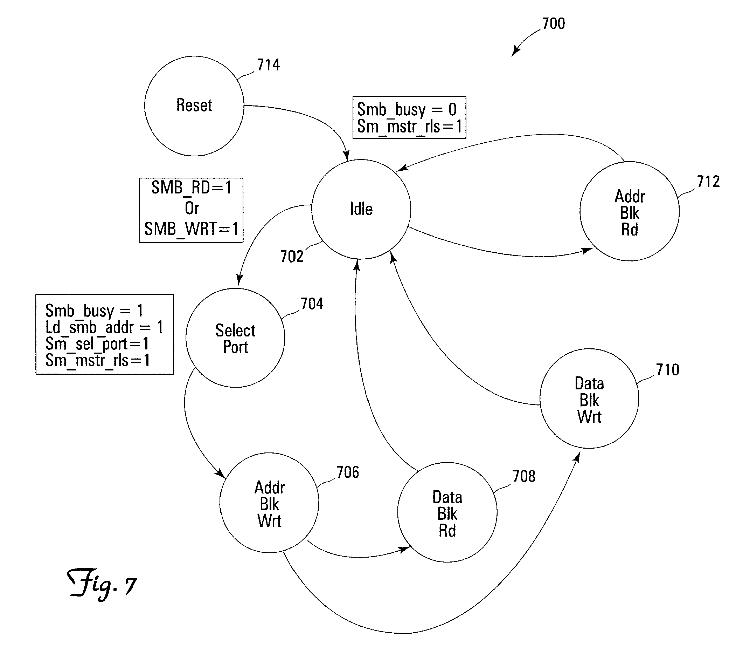

Figure 7 is a flow diagram 700 of one embodiment of a System Management Bus state machine operable with the adapted System Management Bus protocol in accordance with the present invention. The flow is described for an implementation in which the SMBus state machine is the SMBus state machine 137 shown in the SMBus interface 136 of Figure 6. A reset (block 714) puts the SMBus state machine 137 into the reset mode. The SMBus State Machine then enters IDLE after reset or after completing a transaction.

When the SMBus state machine 137 is in IDLE (block 702), the SMBus state machine 137 outputs signals Sm_busy=0 and Sm_mstr_rls=1 to indicate that the SMBus state machine 137 is in the idle state. When a System Management Bus_RD=1 or SMB_WRT=1 signal is received at the SMBus state machine 137, a port is selected (block 704) and the SMBus state machine 137 outputs signals to indicate it is busy (Smb_busy = 1) and outputs signals to control which port is selected (Ld_smb_addr =1, Sm_sel_port=1, and Sm_mstr_rls=1).

An address block write data packet 101 (Figure 3) is formed (block 706). If a read command was received at the SMBus state machine 137, the flow proceeds to block 708 and a data block read data packet is formed to follow the write data packet formed at block 706. The SMBus state machine 137 returns to the IDLE (block 702) upon completion of the transaction.

If a write command was received at the SMBus state machine 137, the flow proceeds to block 710 and a second data block write data packet 102 (Figure 3) is formed to follow the first write data packet 101 formed at block 706. The SMBus state machine 137 returns to the IDLE (block 702) upon completion of the data block write data packet.

If an Address Block Read packet 107 (Figure 5) was received at the SMBus state machine 137, the flow proceeds from block 702 to block 712 and reformatted read command data packet 110 structured as a SMBus Block Read 107 (Figure 5) is formed. The address block read data packet 107 (Figure 5) is received by the peripheral component 60, 61, 62, 63, 64, 65, 65, or 66. The SMBus state machine 137 returns to the IDLE (block 702) upon completion of the data block write data packet.

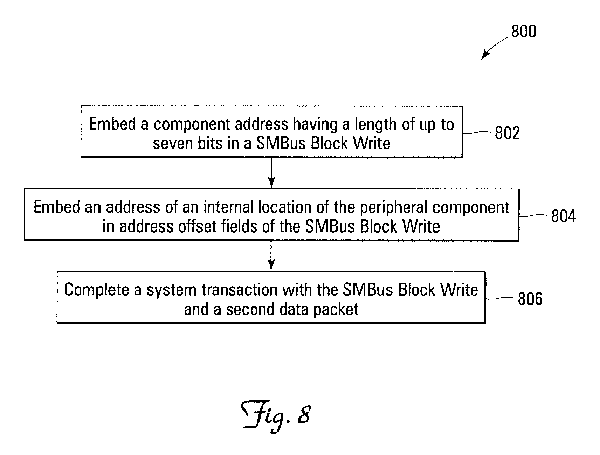

Figure 8 is a flow diagram of one embodiment of a method 800 of adapting the System Management Bus protocol to increase the number of peripheral components accessible to a controller in accordance with the present invention.

In one implementation of this embodiment, the data packets are sent between the control processor 20 and the plurality of peripheral components 55 via the switch 30 of Figure 1. In another implementation of this embodiment, the data packets are sent between the control processor 20 and the plurality of peripheral components 55 via the SMBus port switch 130 of Figure 2. In one implementation of this embodiment, the data packets are reformatted by the switch 30 of Figure 1 as one of the data packets 100, 105, or 110 of Figures 3, 4, or 5, respectively. In another implementation of this embodiment, the data packets are reformatted by the SMBus port switch 130 of Figure 2 as one of the data packets 100, 105, or 110 of Figures 3, 4, or 5, respectively. In yet another implementation of this embodiment, the data packets received from the control processor 20 at the switch are formatted according to a Spacewire protocol, Rapid IO protocol, or are formatted as a RS232 Data Packet.

At block 802, the switch embeds a component address having a length of up to twenty-four bits in a SMBus Block Write. At block 804, the switch embeds an address of an internal location of the peripheral component in address offset fields of the System Management Bus Block Write. In one implementation of this embodiment, the switch embeds an address of an internal location of the peripheral component in address offset fields 145, 146 and 147 of the SMBus Block Write 101 (Figure 3). At block 806, the switch completes a system transaction with the System Management Bus Block Write and a second data packet so that data is sent between the controller and the peripheral component having the component address.

In one implementation of this embodiment of method 800, the switch 130 embeds a component address having a length of up to twenty-four bits in a the slave address field 150 of the SMBus Block Write with PEC 101, embeds an address of an internal location, such as internal location 70 of the peripheral component 60 in address offset fields 145-147 of the SMBus Block Write with PEC 101 and completes a system transaction with the System Management Bus Block Write and a second data packet so that data is sent between the control processor 20 and the peripheral component, such as peripheral component 60, having the component address.

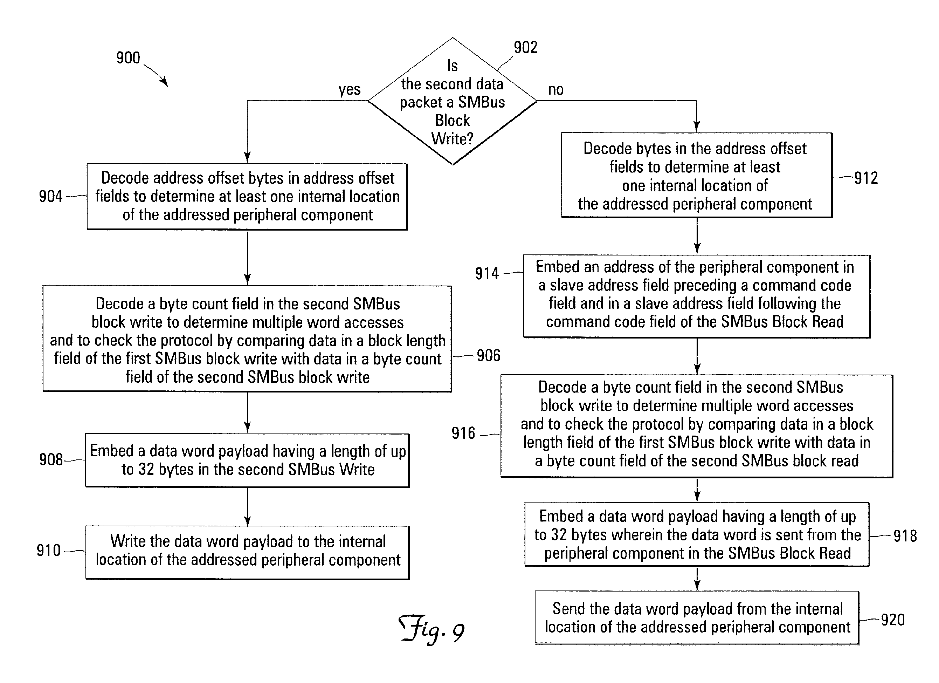

Figure 9 is a flow diagram of one embodiment of a method 900 of completing the system transaction with the SMBus Block Write and a second data packet in accordance with the present invention. In one implementation of this embodiment, the data packets are sent between the control processor 20 and the plurality of peripheral components 55 via the switch 30 of Figure 1. In another implementation of this embodiment, the data packets are sent between the control processor 20 and the plurality of peripheral components 55 via the SMBus port switch 130 of Figure 2.

In one implementation of this embodiment, the data packets are reformatted by the switch 30 of Figure 1 as one of the data packets 100,105, or 110 of Figures 3, 4, or 5, respectively. In another implementation of this embodiment, the data packets are reformatted by the SMBus port switch 130 of Figure 2 as one of the data packets 100, 105, or 110 of Figures 3, 4 or 5, respectively. In yet another implementation of this embodiment, the data packets received from the control processor 20 at the switch are formatted according to a Spacewire protocol, Rapid IO protocol, or are formatted as a RS232 Data Packet.

At block 902, the state machine determines if the second data packet is a SMBus Block Write. If the second data packet is not a SMBus Block Write, it is a SMBus Block Read. In one implementation of this embodiment, the state machine is the System Management Bus state machine 137 of Figure 2. If it is determined at block 902 that the second data packet is a SMBus Block Write, such as second SMBus Block Write with PEC 102 of Figure 3, then the flow proceeds to block 904.

At block 904, the peripheral component decodes address offset bytes in address offset fields to determine at least one internal location of the addressed peripheral component. In one implementation of this embodiment, the peripheral component decodes address offset bytes in address offset fields 145, 146 and 147 of the SMBus Block Write 101 (Figure 3) that were sent as described above with reference to block 804 of method 800 in Figure 8.

At block 906, the peripheral component decodes a byte count field in the second System Management Bus Block Write to determine multiple word accesses and to check the protocol by comparing data in a block length field of the first System Management Bus Block Write with data in a byte count field of the second System Management Bus Block Write. In one implementation of this embodiment, the peripheral component decodes a byte count field 163 in the second System Management Bus Block Write 102. Based on the decoded data, the peripheral component determines if multiple data words are being accessed. The peripheral component also compares the data received in a block length field 148 of the first System Management Bus Block Write 101 with the data from the byte count field 163 of the second System Management Bus Block Write 102. The adapted System Management Bus protocol is confirmed if they match.

At block 908, a data word payload having a length of up to thirty-two bytes is embedded in the second System Management Bus Block Write by the switch and transferred to the peripheral component. In one implementation of this embodiment, the data word payload is embedded in data byte fields 155 and 156 of the second SMBus Block Write with PEC 102 (Figure 2). In one implementation of this embodiment, the data word payload is embedded in a range of four data byte fields to thirty-two data byte in the second System Management Bus Block Write 102 and the data has a length of up to thirty-two bytes. At block 910, the peripheral component writes the data word payload to the internal location of the addressed peripheral component.

If it is determined at block 902 that the second data packet is a SMBus Block Read, such as second SMBus Block Read with PEC 104 of Figure 4, then the flow proceeds to block 912 rather than block 904.

At block 912, the bytes in the address offset fields are decoded to determine at least one internal location of the addressed peripheral component. For example, the bytes in the address offset fields 145, 146, and 147 of the SMBus Block Write 103 are decoded to determine at least one internal location 81 of the addressed peripheral component 63.

At block 914, an address of the peripheral component is embedded in a slave address field preceding a command code field and in a slave address field following the command code field of the System Management Bus Block Read. In one implementation of this embodiment, the address of the peripheral component 63 is embedded at the switch in a slave address field 154 preceding a command code field 161 and in a slave address field 162 following the command code field 161 of the SMBus Block Read 104 (Figure 4). The inclusion of the repeated address of the peripheral component verifies to the peripheral component that the transaction of the SMBus Block Read 104 is a read transaction.

At block 916, the switch decodes a byte count field in the second SMBus block write to determine multiple word accesses and to check the protocol by comparing data in a block length field of the first SMBus block write with data in a byte count field of the second SMBus block read. In an exemplary case, the switch 130 decodes a byte count field 163 in the SMBus Block Read 104 to determine multiple word accesses. The switch 130 also checks the protocol by comparing data in a block length field 148 of the SMBus Block Write 103 with data in a byte count field 163 of the SMBus Block Read 104 (Figure 4). If there is a match the switch sends an acknowledgement in acknowledgement field 168 of the SMBus Block Read 104 to the targeted peripheral component.

At block 918, a data word payload having a length of up to thirty-two bytes is embedded in the SMBus Block Read. In one implementation of this embodiment, the data is embedded in four data byte fields in the SMBus Block Read by the peripheral component. For example, the data word is embedded in the data byte fields 158 and 159 of the SMBus Block Read 104 (Figure 4). In one implementation of this embodiment, the data word payload is embedded in a range of four data byte fields to thirty-two data byte in the second System Management Bus Block Read 104 and the data has a length of up to thirty-two bytes.

At block 920, the data word is sent from the internal location of the addressed peripheral component in the SMBus Block Read responsive to the second address in the SMBus Block Read. To continue the exemplary case, the data word is sent from the internal location 81 of the addressed peripheral component 63 in the SMBus Block Read 104 responsive to the second address in slave address field 162 in the SMBus Block Read 104.

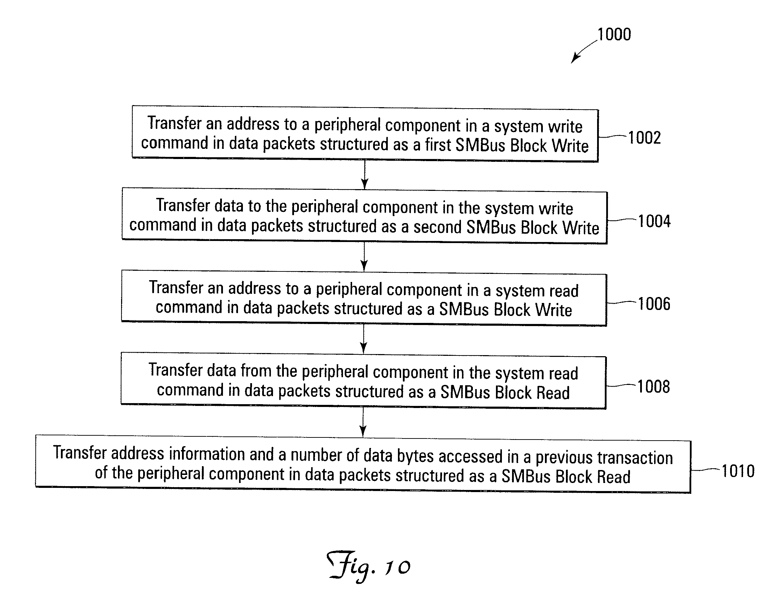

Figure 10 is a flow diagram of one embodiment of a method 1000 of reading data from a peripheral component and writing data to a peripheral component in accordance with the present invention. In one implementation of this embodiment, the data packets are transferred between a control processor 20 and one or more of the peripheral components 60-62 (Figures 1 and 2) in system transactions that implement the data packets 100, 105 or 110 of Figures 3, 4 or 5, respectively.

At block 1002, an address is transferred to a peripheral component in a system write command in data packets structured as a first SMBus Block Write. In an exemplary implementation of this embodiment, the address of the peripheral component 60 (Figures 1 and 2) is transferred to a peripheral component 60 in a system write command in the slave address field 150 of the first SMBus Block Write 101 (Figure 3). In this case, the address of an internal location, such as internal location 70, is transferred to the peripheral component 60 in address offset fields 145, 146 and 147.

At block 1004, data is transferred to the peripheral component in the system write command in data packets structured as a second SMBus Block Write. In the exemplary implementation of this embodiment, data is transferred to the peripheral component 60 in the system write command in data packets structured as a second SMBus Block Write 102 (Figure 3). In this case, the data to be stored in the internal location, such as internal location 70, is transferred to the peripheral component 60 in data byte fields 155, 156 and 157 (Figure 3).

At block 1006, an address is transferred to a peripheral component in a system read command in data packets structured as a SMBus Block Write. In an exemplary implementation of this embodiment, the address is transferred to a peripheral component 63 (Figures 1 and 2) in a system read command in data packets structured as a SMBus Block Write 103 (Figure 4). In this case, the address of an internal location, such as internal location 81, is transferred to the peripheral component 63 in address offset fields 145, 146 and 147 (Figure 4).

At block 1008, data is transferred from the peripheral component in the system read command in data packets structured as a SMBus Block Read. In the exemplary case of block 1006, the data is transferred from the peripheral component 63 in the system read command in the data byte fields 158 and 159 of a SMBus Block Read 104 (Figure 4).

At block 1010, address information and a number of data bytes accessed in a previous transaction of the peripheral component are transferred to the control processor in data packets structured as a SMBus Block Read. In one implementation of this embodiment, the address information and a number of data bytes accessed in a previous transaction of the peripheral component 66 (Figures 1 and 2) are transferred to the control processor in data packets structured as a SMBus Block Read 107 (Figure 5).

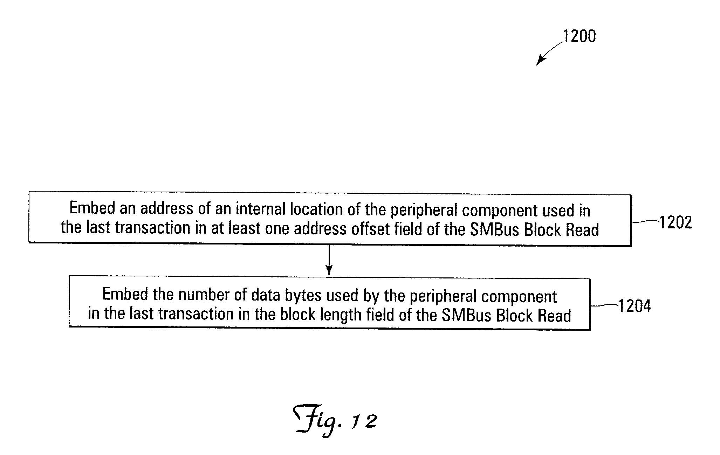

Block 1010 is implemented if the control processor 20 (Figures 1 and 2) is interrogating a peripheral component. In this case, the transaction is completed using a data packet that is configured as the data packet 110 (Figure 5). Additional details about an implementation of block 1010 are described below with reference to method 1200 of Figure 12.

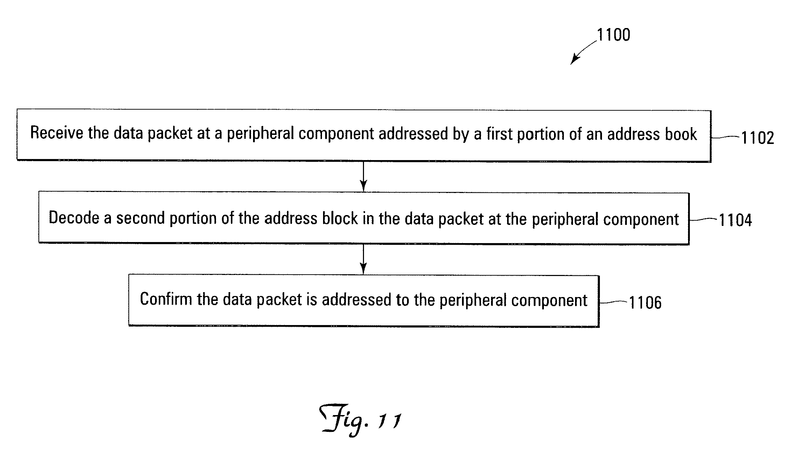

Figure 11 is a flow diagram of one embodiment of a method of determining an address of a peripheral component in accordance with the present invention. At block 1102, a peripheral component addressed by a first portion of an address block receives the data packet. In one implementation of this embodiment, the peripheral component receives data packets in a system transaction in which the data packets are configured by the switch 130 of Figure 2 as the data packet 105 of Figure 4. In this case, the targeted peripheral component decodes the first portion of the slave address field 150 in the SMBus Block Write 103.

At block 1104, the peripheral component decodes a second portion of the address block in the data packet. In one implementation of this embodiment, the targeted peripheral component decodes the second portion of the slave address field 150 in the SMBus Block Write 103. At block 1106, the peripheral component confirms the data packet is addressed to the peripheral component. In one implementation of this embodiment, if the peripheral component 60 (Figure 2) determines that the address is the address of the peripheral component 60, and the peripheral component then decodes the address offset bytes in the address offset byte fields 145, 146 and 147 to determine which of the internal locations, for example, 70, 71, or 72, is being accessed in the System Management Bus write command.

Figure 12 is a flow diagram of one embodiment of a method 1200 of transferring address information and a number of data packet accessed in a previous transaction in accordance with the present invention. In one implementation of this embodiment, a system transaction of interrogating a peripheral component is completed using the SMBus Address Block Read 107 of Figure 3. In another implementation of this embodiment, the data packets are sent between the control processor 20 and the peripheral components 60-66 via the SMBus port switch 130 of Figure 2 in an interrogation of the peripheral components 60-66. In yet another implementation of this embodiment, the data packets are sent between the control processor 20 and a subset of the plurality of peripheral components 55 via the switch 30 of Figure 1.

At block 1202, an address of an internal location of a peripheral component used in the last transaction is embedded in at least one address offset field of the SMBus Block Read. The address offset fields have a length of up to twenty-four bits in a System Management Bus Block Write. In one implementation of this embodiment, the internal location 82 of a peripheral component 63 (Figure 2) was used in the last transaction and the address of the internal location 82 is embedded in at least one address offset field 245 of the SMBus Block Read 107 (Figure 5).

At block 1204, the number of data bytes used by the peripheral component in the last transaction is embedded in the block length field of the SMBus Block Read. In the exemplary case described with reference to block 1202, the number of data bytes used by the peripheral component 63 in the last transaction is embedded in the block length field 248 of the SMBus Block Read 107, which also referred to here as an interrogation data packet, of Figure 5.

Thus in an exemplary implementation, the peripheral component responds to the second slave address field 162 in the SMBus Block Read 107 (by sending data in the address offset field(s) 245, 246, and/or 247 of the SMBus Address Block Read 107 that indicates the internal location 91 of the peripheral component 66 that was used in the previous SMBus transaction. The peripheral component 66 additionally responds to the interrogation data packet by sending data in the block length field 248 that indicates the number of data bytes accessed in the previous SMBus transaction for the peripheral component 66.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

1. A method of adapting the System Management Bus protocol to increase the number of peripheral components 60 accessible to a control processor 20, the method comprising:
embedding a component address having a length of up to seven bits in a System Management Bus Block Write 101; and
completing a system transaction with the System Management Bus Block Write and a second data packet 102, wherein data is sent between the control processor and the peripheral component having the component address.

2. The method of claim 1, wherein embedding a component address comprises:
embedding an address of an internal location 70 of the peripheral component 60 in address offset fields of the System Management Bus Block Write 101.

3. The method of claim 1, wherein the System Management Bus Block Write is a first System Management Bus Block Write 101, wherein the second data packet is a second System Management Bus Block Write 102, the method further comprising:
embedding a data word payload having a length of up to thirty-two bytes in the second System Management Bus Block Write, wherein the data word payload in the second System Management Bus Block Write is written to the peripheral component 60.

4. The method of claim 3, further comprising:
decoding address offset bytes in address offset fields 145 to determine at least one internal location 70 of the addressed peripheral component 60; and
writing the data word payload to the internal location of the addressed peripheral component.

5. The method of claim 4, further comprising:
checking the protocol by comparing data in a block length field 148 of the first System Management Bus Block Write 101 with data in a byte count field 163 of the second System Management Bus Block Write 102.

6. The method of claim 1, wherein the second data packet is a System Management Bus Block Read 104, the method further comprising:
embedding an address of the peripheral component 70 in a slave address field 154 preceding a command code field 161 and in a slave address field 162 following the command code field of the System Management Bus Block Read; and
embedding a data word payload having a length of up to thirty-two bytes, wherein the data word payload is sent from the peripheral component in the System Management Bus Block Read responsive to the second address in the System Management Bus Block Read.

7. A method of reading data from a peripheral component 70 and writing data to a peripheral component 70, the method comprising:
transferring an address to a peripheral component in a system write command in data packets structured as a first SMBus Block Write 101;
transferring data to the peripheral component in the system write command in data packets structured as a second SMBus Block Write 102;
transferring an address to a peripheral component in a system read command in data packets structured as a SMBus Block Write 103;
transferring data from the peripheral component in the system read command in data packets structured as a SMBus Block Read 104; and
transferring address information and a number of data bytes accessed in a previous transaction of the peripheral component in data packets structured as a SMBus Block Read 107.

8. A computer-readable medium having computer-executable instructions for performing a method comprising:
embedding an address of an internal location 70 of a peripheral component 60 in address offset fields 145 having a length of up to seven bits in a System Management Bus Block Write 101; and
completing a system transaction with the System Management Bus Block Write and a second data packet wherein data is sent between a control processor 20 and the peripheral component 60 in to complete a system transaction.

9. The medium of claim 8, wherein the System Management Bus Block Write is a first System Management Bus Block Write 101 and the second data packet is a second System Management Bus Block Write 102, wherein the method performed by the medium having computer-executable instructions further comprises:
embedding the data word payload in a range of four data byte fields to thirty-two data byte fields in the second System Management Bus Block Write, the data word payload having a length of up to thirty-two bytes, wherein the data word payload is written to the peripheral component.

10. The medium of claim 9, wherein the method performed by the medium having computer-executable instructions further comprises:
checking the protocol by comparing data in a block length field 148 of the first System Management Bus Block Write 101 with data in a byte count field 163 of the second System Management Bus Block Write 102.
